(19) Europäisches Patentamt
European Patent Office
Office européen des brevets

(11) **EP 1 576 035 B1**

(12) **EUROPÄISCHE PATENTSCHRIFT**

(45) Veröffentlichungstag und Bekanntmachung des Hinweises auf die Patenterteilung:
**07.01.2009 Patentblatt 2009/02**

(21) Anmeldenummer: **03789116.5**

(22) Anmeldetag: **03.12.2003**

(51) Int Cl.:
*C08G 77/18* (2006.01)   *C08G 79/00* (2006.01)

(86) Internationale Anmeldenummer:
**PCT/EP2003/013614**

(87) Internationale Veröffentlichungsnummer:
**WO 2004/058859 (15.07.2004 Gazette 2004/29)**

(54) **VERFAHREN ZUR HERSTELLUNG VON POLYALKYL(HALB)METALLATEN**

METHOD FOR PRODUCING POLYALKYL(SEMI)METALLATES

PROCÉDÉ POUR LA PRODUCTION DE POLYALKYL(SEMI)METALLATES

(84) Benannte Vertragsstaaten:
**AT BE BG CH CY CZ DE DK EE ES FI FR GB GR HU IE IT LI LU MC NL PT RO SE SI SK TR**

(30) Priorität: **27.12.2002 DE 10261289**

(43) Veröffentlichungstag der Anmeldung:
**21.09.2005 Patentblatt 2005/38**

(73) Patentinhaber: **Sus Tech GmbH & Co. KG**
**64287 Darmstadt (DE)**

(72) Erfinder:
• **BEDFORD, Oliver**
**64372 Ober-Ramstadt (DE)**
• **JAUMANN, Manfred**
**89077 Ulm (DE)**
• **GÖDEL, Werner**
**89081 Ulm (DE)**
• **MÖLLER, Martin**
**52070 Aachen (DE)**

(74) Vertreter: **Kluschanzoff, Harald**
**Henkel AG & Co. KGaA**
**VTP Patente**
**40191 Düsseldorf (DE)**

(56) Entgegenhaltungen:
EP-A- 0 557 958          EP-A- 0 803 540
EP-A- 0 964 020          EP-A- 1 142 929
DE-A- 19 750 706         US-A- 5 621 034

• **KAZAKOVA,V. ET AL.: "Synthesis of Inorganic Dendritic Systems: Hyperbranched Ethyl Silicates" DOKLADY CHEMISTRY, Bd. 349, 1996, Seiten 190-193, XP0009029561 in der Anmeldung erwähnt**
• **POST,H.W. ET AL.: "Studies in Silico-Organic Compounds. (II) The reactions of Silicoorthoesters with certain Acid Anhydrides" J.ORG.CHEM., Bd. 5, 1940, Seiten 443-448, XP002277433**
• **NARAIN, R.P. ET AL.: "Reactions of Silicon Alkoxides with Aliphatic Acid Anhydrides" J. INDIAN CHEM SOC., Bd. 12, Nr. 39, 1962, Seiten 855-859, XP0009029560**

## Beschreibung

Die vorliegende Erfindung betrifft ein Verfahren zur Herstellung von Polyalkyl(halb)metallaten durch Oligomerisierung bzw. Polymerisation von (Halb)metallalkoholaten des Siliziums.

Polyalkyl(halb)metallate des Siliziums sind Synonyme für die Ester von (Hetero)polysäuren dieses Halbmetalls mit Alkanolen. Polyalkyl(halb)metallate reagieren bei Einwirkung von Wasser unter intramolekularer Vernetzung. Zudem lassen sie sich durch Einwirkung von Wasser bei erhöhter Temperatur und/oder durch Kalzinieren in die entsprechenden Hydroxide und Oxide umwandeln. Daher eignen sich Polyalkyl(halb)metallate zur Herstellung von Beschichtungen, die sich dann in Oxid-Schichten umwandeln lassen.

Verschiedentlich wurden oligomere (Halb)metallalkoholate, insbesondere Polyalkylsilikate (hier synonym für Poly(alkoxysiloxane)) beschrieben. Ihre Herstellung erfolgt in der Regel durch partielle Hydrolyse der entsprechenden monomolekularen (Halb)metallalkoholate. Hierbei kommt es zur Bildung von Metall-gebundenen OH-Gruppen, die unter Wasser- bzw. Alkoholabspaltung (Kondensation) mit weiterem Ausgansmaterial oder Hydrolyseprodukten unter Molekulargewichtsaufbau abreagieren. Aufgrund ihrer Herstellung enthalten derartige Polyalkyl(halb)metallate freie OH-Gruppen. Da diese OH-Gruppen ihrerseits eine Kondensationsreaktion einleiten können, ist die Lagerstabilität der so erhaltenen Produkte nicht zufriedenstellend. Um eine ausreichende Lagerfähigkeit zu erreichen, müssen diese Produkte daher in der Regel verdünnt werden. Dies hat zur Folge, dass bei der dieser Verbindungen in ihre Oxide bzw. Hydroxide verhältnismäßig große Mengen an Lösungsmittel und/oder Wasser freigesetzt bzw. abgetrennt werden müssen. Der damit verbundene Volumenschrumpf erlaubt es nicht, homogene Oxid-Filme ohne Einschlüsse und/oder Risse herzustellen.

Als alternative Vorprodukte für Siliziumdioxid und organomodifiziertes Siliziumdioxid wurden verschiedentlich polyhedrale Silsesquioxane beschrieben. Polyhedrale Silsesquioxane weisen theoretisch die allgemeine Summenformel $RSiO_{1,5}$ auf, worin R einen einwertigen C-gebundenen organischen Rest wie Alkyl, Phenyl und dergleichen bedeutet. Ihre Herstellung erfolgt über mehrere Stufen, umfassend eine partielle Hydrolyse eines Trialkoxysilans und eine nachgeschaltete Kondensation des dabei erhaltenen Produkts mit einem Trihalogensilan. Dementsprechend sind Silsesquioxane sehr teuer.

Verschiedentlich werden oligomere Alkylsilikate beschrieben, die angeblich keine OH-Gruppen aufweisen. Diese Silikate haben jedoch den Nachteil, dass sie in der Regel mehr als 10 % monomeres Tetraalkylsilikat enthalten. Der Silikatanteil (gerechnet als $SiO_2$) liegt in diesen Substanzen in der Regel unterhalb 45 Gew.-%, so dass auch bei diesen Substanzen bei der Umwandlung in Siliziumdioxid mit einem beträchtlichen Volumenschrumpf zu rechnen ist.

V.V. Kazakova et al. (Doklady Chemistry, Vol. 349, 1996, S. 190-193) beschreiben die Herstellung von verzweigtem Polyethylsilikat durch Umsetzung von Tetraethylsilikat mit stöchiometrischen Mengen an Natriumhydroxid, Neutralisation des dabei erhaltenen Triethylnatriumsilikats zum Triethoxysilanol und dessen anschließende Kondensation. Als Katalysator ist Ammoniak erforderlich. Dieses Verfahren ist jedoch bezüglich der Eigenschaften der dabei erhaltenen Polyalkylsilikate schlecht reproduzierbar. Die erreichten Molekulargewichte sind zudem beschränkt auf zahlenmittlere Molekulargewichte unterhalb 1500 Dalton. Zudem weisen diese Produkte Silikat-Gehalte (gerechnet als $SiO_2$) unterhalb 49 Gew.-% auf. Außerdem ist dieses Verfahren auf die Herstellung von verzweigten Polyalkylsilikaten beschränkt.

Der vorliegenden Erfindung liegt daher die Aufgabe zugrunde, ein Verfahren bereitzustellen, das eine kontrollierte Herstellung von Polyalkylsilikaten, welche keine freien OH-Gruppen aufweisen, erlaubt. Zudem sollte dieses Verfahren die Herstellung von Polyalkylsilikaten mit Molekulargewichten $M_n$ oberhalb 1500 Dalton ermöglichen. Insbesondere sollen Polyalkylsilikatemit hohem Siliziumgehalt bzw. Silikat-Gehalt herstellbar sein.

Es wurde überraschenderweise gefunden, dass diese Aufgabe durch ein Verfahren gelöst wird, bei dem man ein Tetra($C_1$-$C_4$-alkyl)silikat mit dem Anhydrid II einer aliphatischen $C_2$-$C_4$-Monocarbonsäure in einer Menge von 0,8 bis 1,2 Mol pro Mol Tetraalkylsilikat umsetzt und wenigstens 80 %, bezogen auf die theoretische Menge, des bei der Reaktion entstehenden $C_1$-$C_4$-Alkylesters III der aliphatischen $C_1$-$C_4$-Monocarbonsäure entfernt, wobei man die Umsetzüng einstufig in Gegenwart katalytischer Mengen an tetra ($C_1$-$C_4$-alkyl)titanat oder Zink (II)-alkanolat als Katalysator durchführt. Überraschenderweise lässt sich dieses Verfahren auch auf Trialkoxysilane übertragen. Die in dem erfindungsgemäßen Verfahren einsetzbaren (Halb)metallalkoholate lassen sich durch die allgemeine Formel I

$$RM(OR^1)_3 \qquad (I)$$

beschreiben, worin

M   Si, bedeutet;

R   für $C_1$-$C_{10}$-Alkyl, $C_3$-$C_{10}$-Alkenyl, Phenyl, Phenyl-$C_1$-$C_4$-alkyl, $C_5$-$C_{10}$-Cycloalkyl, $C_5$-$C_{10}$-Cycloalkyl-$C_1$-$C_4$-alkyl steht, wobei die vorgenannten Gruppen ein oder mehrere Substituenten ausgewählt unter Halogen, $C_1$-$C_4$-Alkyl, $C_1$-$C_4$- Halogenalkyl oder $C_1$-$C_4$-Alkoxy aufweisen können, für eine Gruppe O-Si($R^2$)$_3$, worin $R^2$ $C_1$-$C_4$-Alkyl,

$C_1$-$C_4$-Halogenalkyl oder $C_1$-$C_4$-Alkoxy bedeutet, oder für $C_1$-$C_4$-Alkoxy steht; und

$R^1$     $C_1$-$C_4$-Alkyl bedeutet.

Hier und im folgenden stehen

$C_1$-$C_4$-Alkyl für: z. B. Methyl, Ethyl, Propyl, 1-Methylethyl, Butyl, 1-Methylpropyl, 2-Methylpropyl oder 1,1-Dimethylethyl.

$C_1$-$C_{10}$-Alkyl für lineares oder verzweigtes Alkyl mit 1 bis 10 C-Atomen, $C_1$-$C_4$-Alkyl, wie voranstehend genannt, sowie z. B. n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1-Ethyl-1-methylpropyl, 1-Ethyl-3-methylpropyl, n-Heptyl, 1,1-Dimethylpentyl, 1,2-Dimethylpentyl, 1,3-Dimethylpentyl, 2,2-Dimethylpentyl, 2,3-Dimethylpentyl, 3,3-Dimethylpentyl, 1-Ethylpentyl, 2-Ethylpentyl, 1,1,2-Trimethylbutyl, 1-Ethyl-1-methylbutyl, 1-Ethyl-3-methylbutyl, n-Octyl, 2-Ethylhexyl, n-Nonyl, 1-Methyloctyl, n-Decyl, 1-Methylnonyl, 1-Ethyloctyl oder 3-Propylheptyl.

$C_2$-$C_{10}$-Alkenyl, z. B. Prop-1-en-3-yl, But-1-en-4-yl, 1-Methyl-prop-2-en-1-yl, 2-Methyl-prop-2-en-1-yl, 2-Buten-1-yl, 1-Penten-3-yl, 1-Penten-4-yl, 2-Penten-4-yl, 1-Methyl-but-2-en-1-yl, 2-Methyl-but-2-en-1-yl, 3-Methyl-but-2-en-1-yl, 1-Methyl-but-3-en-1-yl, 2-Methyl-but-3-en-1-yl, 3-Methyl-but-3-en-1-yl, 1,1-Dimethyl-prop-2-en-1-yl, 1,2-Dimethyl-prop-2-en-1-yl, 1-Ethyl-prop-2-en-1-yl, Hex-3-en-1-yl, Hex-4-en-1-yl, Hex-5-en-1-yl, 1-Methyl-pent-3-en-1-yl, 2-Methyl-pent-3-en-1-yl, 3-Methyl-pent-3-en-1-yl, 4-Methyl-pent-3-en-1-yl, 1-Methyl-pent-4-en-1-yl, 2-Methyl-pent-4-en-1-yl, 3-Methyl-pent-4-en-1-yl, 4-Methyl-pent-4-en-1-yl, 1,1-Dimethyl-but-2-en-1-yl, 1,1-Dimethyl-but-3-en-1-yl, 1,2-Dimethyl-but-2-en-1-yl, 1,2-Dimethyl-but-3-en-1-yl, 1,3-Dimethyl-but-2-en-1-yl, 1,3-Dimethyl-but-3-en-1-yl, 2,2-Dimethyl-but-3-en-1-yl, 2,3-Dimethyl-but-2-en-1-yl, 2,3-Dimethyl-but-3-en-1-yl, 3,3-Dimethyl-but-2-en-1-yl, 1-Ethyl-but-2-en-1-yl, 1-Ethyl-but-3-en-1-yl, 2-Ethyl-but-2-en-1-yl, 2-Ethyl-but-3-en-1-yl, 1,1,2-Trimethyl-prop-2-en-1-yl, 1-Ethyl-1-methyl-prop-2-en-1-yl oder 1-Ethyl-2-methyl-prop-2-en-1-yl.

Phenyl-$C_1$-$C_4$-alkyl: durch einen Phenylrest substituiertes $C_1$-$C_4$-Alkyl, z. B. Benzyl, 1-Phenylethyl und 2-Phenylethyl, wobei der Phenylrest in der angegebenen Weise teilweise oder vollständig halogeniert sein kann.

$C_5$-$C_{10}$-Cycloalkyl: ein mono- bi- oder tricyclischer gesättigter Kohlenwasserstoffrest mit 5 bis 10 C-Atomen wie z B. Cyclopentyl, Cyclohexyl, Cycloheptyl, Bicyclo[2.2.1]heptyl, , Bicyclo[2.2.2]octyl und dergleichen.

$C_5$-$C_{10}$-Cycloalkyl-$C_1$-$C_4$-alkyl: durch einen $C_5$-$C_{10}$-Cycloalkylrest substituiertes $C_1$-$C_4$-Alkyl, wie Cyclopentylmethyl, 2-Cyclopentylethyl, 2- oder 3-Cyclopentylpropyl, Cyclohexylmethyl, 2-Cyclohexylethyl, 2- oder 3-Cyclohexylpropyl.

$C_1$-$C_4$-Halogenalkyl für: einen $C_1$-$C_4$-Alkylrest, wie vorstehend genannt, der partiell oder vollständig durch Fluor, Chlor, Brom und/oder Iod substituiert ist, also z. B. Chlormethyl, Dichlormethyl, Trichlormethyl, Fluormethyl, Difluormethyl, Trifluormethyl, Chlorfluormethyl, Dichlorfluormethyl, Chlordifluormethyl, 2-Fluorethyl, 2-Chlorethyl, 2-Bromethyl, 2-Iodethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl, 2-Fluorpropyl, 3-Fluorpropyl, 2,2-Difluorpropyl, 2,3-Difluorpropyl, 2-Chlorpropyl, 3-Chlorpropyl, 2,3-Dichlorpropyl, 2-Brompropyl, 3-Brompropyl, 3,3,3-Trifluorpropyl, 3,3,3-Trichlorpropyl, 2,2,3,3,3-Pentafluorpropyl, Heptafluorpropyl, 1-(Fluormethyl)-2-fluorethyl, 1-(Chlormethyl)-2-chlorethyl, 1-(Brommethyl)-2-bromethyl, 4-Fluorbutyl, 4-Chlorbutyl, 4-Brombutyl oder Nonafluorbutyl;

$C_1$-$C_4$-Alkoxy für: z. B. Methoxy, Ethoxy, Propoxy, 1-Methylethoxy, Butoxy, 1-Methylpropoxy, 2-Methylpropoxy oder 1,1-Dimethylethoxy.

Die vorliegende Erfindung betrifft somit ein Verfahren zur Herstellung von oligomeren und polymeren Polyalkyl(halb)metallaten, umfassend die Umsetzung des (Halb)metallalkoholats I mit dem Anhydrid II einer aliphatischen $C_2$-$C_4$-Monocarbonsäure in einer Menge von 0,8 bis 1,2 Mol insbesondere 0,9 bis 1,1 Mol und speziell etwa stöchiometrische Mengen (0,95 bis 1,05 Mol) pro Mol (Halb)metallalkoholat I in Abwesenheit von Wasser und Entfernen von wenigstens 80 %, bezogen auf die theoretische Menge, des bei der Reaktion entstehenden $C_1$-$C_4$-Alkylesters III der aliphatischen $C_2$-$C_4$-Monocarbonsäure, wobei man die Umsetzung einstufig in Gegenwart katalytischer Mengen an Tetral ($C_1$-$C_4$-alkyl) titanat oder Zink (II)-alkanolat als Katalysator durchführt.

Abwesenheit von Wasser bedeutet hier und im Folgenden ein Wassergehalt im Reaktionsgemisch von weniger als 1000 ppm, insbesondere weniger 500 ppm und speziell weniger als 200 ppm.

Die bei der Reaktion theoretisch sich bildende Menge an Alkylester III entspricht der doppelten molaren Menge an Anhydrid II. Um den gewünschten geringen Gehalt an monomerem Ausgangsmaterial I zu erreichen, ist es wichtig, dass wenigstens 80 %, vorzugsweise wenigstens 85 %, insbesondere wenigstens 90 % und speziell wenigstens 95 % des bei der Reaktion gebildeten $C_1$-$C_4$-Alkylesters III aus dem Reaktionsgemisch entfernt wird. Üblicherweise wird man den Alkylester III auf destillativem Wege entfernen.

Zur Erreichung einer ausreichend hohen Umsetzungsrate wird man üblicherweise die Reaktion bei erhöhter Temperatur durchführen. Vorzugsweise wird man Druck und Temperatur so wählen, dass der Alkylester III abdestilliert, die Einsatzmaterialien I und II jedoch nicht. Vorzugsweise führt man daher die Umsetzung bei Temperaturen oberhalb 60°C, insbesondere bei wenigstens 100°C und speziell im Bereich von 100 bis 150°C durch.

Üblicherweise führt man die Umsetzung im Bereich von Normaldruck, d. h. bei Drucken im Bereich von 0.7 x $10^5$ Pa bis 1.2 x $10^5$ Pa durch.

Beispiele für geeignete Anhydride II sind Essigsäureanhydrid, Propionsäureanhydrid und n-Butyranhydrid sowie gemischte Anhydride wie das Anhydrid von Essigsäure mit Ameisensäuren oder Propionsäure. Bevorzugtes Anhydrid II ist Essigsäureanhydrid.

Als Ausgangsmaterialien für das erfindungsgemäße Verfahren kommen (Halb)metallalkoholate I des Siliziums in Betracht (M = Si).

In einer bevorzugten Ausführungsform der Erfindung steht R in Formel I für $C_1$-$C_4$-Alkoxy, insbesondere Methoxy und speziell Ethoxy. Derartige Verbindungen werden im folgenden auch als Verbindungen Ia bezeichnet.

In Formel I bzw. Ia steht $R^1$ vorzugsweise für Methyl und insbesondere für Ethyl.

Besonders bevorzugte Ausgangsmaterialien für das erfindungsgemäße Verfahren sind Tetra-$C_1$-$C_4$-alkylsilikate, also Verbindungen Ia mit M = Si sowie Alkyltri-$C_1$-$C_4$-alkoxysilane und (Halogenalkyl)tri-$C_1$-$C_4$-alkoxysilane, also Verbindungen der Formel I, worin R für gegebenenfalls durch Halogen, insbesondere durch Fluor substituiertes $C_1$-$C_{10}$-Alkyl steht. Beispiele für bevorzugte Einsatzmaterialien sind Tetramethylsilikat, Tetraethylsilikat, Methyltriethoxysilan, Ethyltriethoxysilan, Trifluorethyltriethoxysilan, Heptadecafluor-1,1,2,2-tetrahydrodecyltriethoxysilan.

Das erfindungsgemäße Verfahren wird in einer Stufe durchgeführt.

Im Sinne des erfindungsgemäßen Verfahrens setzt man das (Halb)metallalkoholat I in einstufiger Reaktionsführung um. Bezüglich der Reaktionstemperaturen, Reaktionsdruck und Stöchiometrie gilt das oben Gesagte. Die Reaktion wird in der Regel solange durchgeführt, bis wenigstens 80 % und vorzugsweise wenigstens 90 % und insbesondere wenigstens 95 % der theoretischen Menge an Ester III aus der Reaktionsmischung entfernt wurden.

Erfindungsgemäß setzt man eine Verbindung I in Gegenwart eines Katalysators, der ausgewählt ist unter Tetra($C_1$-$C_4$-alkyl)titanaten oder Zink-bis($C_1$-$C_4$-alkanolat) um. Die Menge an Katalysator beträgt in der Regel 0,01 bis 1 Mol-% und insbesondere 0,05 bis 0,5 Mol-%, bezogen auf die Verbindung I. Bei diesen Verbindungen führt die einstufige Herstellungsweise in Abwesenheit von Katalysatoren zu geringeren Ausbeuten, da beim Entfernen des gebildeten Esters III geringe Mengen an Ausgangsmaterial I und Anhydrid II abdestillieren.

Ein weiterer Molekulargewichtsaufbau kann durch eine thermische Nachbehandlung des primär erhaltenen Reaktionsprodukts bei erhöhter Temperatur und vermindertem Druck erreicht werden. Die zur Nachbehandlung erforderliche Temperatur liegt in der Regel oberhalb 100°C, vorzugsweise oberhalb 120°C, insbesondere im Bereich von 150 bis 350°C und speziell im Bereich von 200 bis 300°C. Der Druck wird in der Regel weniger als 0,1 x $10^5$ Pa, vorzugsweise weniger als 0,05 x $10^5$ Pa, insbesondere weniger als 0,01 x $10^5$ Pa und speziell weniger als 0,005 x $10^5$ Pa betragen. Diese Bedingungen führen zum einen zum Abdestillieren von Oligomeren mit geringerem Molekulargewicht und zum anderen zu einem Fortschreiten der Kondensationsreaktion.

Durch das erfindungsgemäße Verfahren erhält man oligomere und polymere Kondensationsprodukte, die hier als Polyalkyl(halb)metallate bezeichnet werden. Diese weisen in der Regel eine verzweigte Struktur auf. Die durch erfindungsgemäße Umsetzung einer Verbindung I erhaltenen Oligomere und Polymere können ein zahlenmittleres Molekulargewicht $M_n \geq 1600$ Dalton aufweisen. Diese Produkte können durch die Summenformel

$$[MORR^1]_X[M_2O_3R^1_2]_Y$$

beschrieben werden, worin M, R und $R^1$ die zuvor genannten Bedeutungen aufweisen und für x und y die folgenden Relationen gelten:

$0,2 < (x + y) \leq 0,85$, insbesondere $0,3 \leq (x + y) \leq 0,8$,
$0,15 \leq y \leq 0,8$, insbesondere $0,2 \leq y \leq 0,7$, und $x + 2y = 1$.

Im Falle der durch erfindungsgemäße Umsetzung von Verbindungen Ia = $M(OR^1)_4$ erhaltenen Produkte vereinfacht sich die Summenformel wie folgt:

$$[MO(OR^1)_2]_{X+Y}[MO_2]_y$$

wobei M, R, x und y die zuvorgenannten Bedeutungen aufweisen.

Hierbei betrifft eine bevorzugte Ausführungsform der Erfindung Polyalkylsilikate, die durch Umsetzung von I mit M = Si und R = Alkoxy erhalten werden.

Eine weitere bevorzugte Ausführungsform der Erfindung betrifft Poly(alkylalkoxysiloxane), die durch Kondensation von I mit M = Si und R $\neq$ Alkoxy erhalten werden.

Die erfindungsgemäßen hergestellten Oligomere und Polymere zeichnen sich durch höhere Metallgehalte aus als vergleichbare Produkte des Standes der Technik. Im Falle der Kondensationsprodukte des Tetraethylorthosilikats weisen derartige Produkte Siliziumgehalte von wenigstens 23 Gew.-% und insbesondere wenigstens 24 Gew.-% auf. Dies entspricht einem $SiO_2$-Gehalt von mehr als 50 Gew.-%. Trotz ihres hohen Metalloxid-Gehalts sind diese Verbindungen flüssig und in organischen Lösungsmitteln löslich.

In der Regel liegt der Verzweigungsgrad der erfindungsgemäß erhältlichen Polyalkyl(halb)metallate, insbesondere der Polyalkylsilikate im Bereich von 0,2 bis 0,7 und insbesondere im Bereich von 0,3 bis 0,6.

Der Verzweigungsgrad DB nach Frey (siehe D.Hölter, A.Burgath, H.Frey, Acta Polym. 1997, 48, S. 30) wird durch die folgende Formel definiert:

$$DB = \frac{2Q_4 + Q_3}{\frac{2}{3}(3Q_4 + 2Q_3 + Q_2)}$$

In dieser Formel steht $Q_4$ für den Prozentsatz derjenigen Atome M, die über 4 Sauerstoffatome mit 4 benachbarten Atomen M verknüpft sind (dendritische Einheiten). Dementsprechend steht $Q_3$ für den Prozentsatz der Atome M die über Sauerstoffatome mit 3 benachbarten Atomen M verknüpft (semi-dendrische Einheiten) sind und $Q_2$ für denjenigen Prozentsatz an Atomen M, der über Sauerstoffatome mit 2 benachbarten Atomen M verknüpft sind (lineare Einheiten). (Notation nach G.Engelhardt, H.Jancke, D.Hoebbel, W.Wiecker, Z. Chem 1974, 14, S. 109). Im Falle von Polyalkylsilikaten, die durch Kondensation von Tetraalkylsilikaten erhältlich sind, kann der Verzweigungsgrad mittels $^{29}$Si-NMR-Spektroskopie ermittelt werden. Hierbei entspricht das Signal im Bereich von -94 bis -97 ppm den linearen Si-O-Einheiten, das Signal im Bereich von -102 bis -105 ppm den semidendritischen Einheiten und das Signal im Bereich von -109 bis -111 ppm den dendritischen Einheiten. Terminale Einheiten $Q_4$ werden im Bereich von - 88 bis -90 ppm. beobachtet. Die Fläche unter den Signalen erlaubt es, gegebenenfalls unter Berücksichtigung des unterschiedlichen Relaxationsverhaltens, die relative Anzahl an terminalen, linearen, semidendritischen und dendritischen Einheiten in den erhaltenen Polyalkylsilikaten zu berechnen.

Der Gehalt an nicht umgesetzten Verbindungen I beträgt in den erfindungsgemäß erhältlichen Produkten in der Regel weniger als 5 Gew.-% und insbesondere weniger als 2 Gew.-%.

Das Molekulargewicht der durch das erfindungsgemäße Verfahren erhältlichen Produkte kann über weite Bereiche variiert werden. Dabei hängt das Molekulargewicht von der Reaktionsdauer, von dem Anteil an entferntem Ester III und von der optionalen thermischen Nachbehandlung ab. Die nach dem erfindungsgemäßen Verfahren erhaltenen Produkte weisen in der Regel zahlenmittlere Molekulargewichte $M_n$ von wenigstens 1600 Dalton, z.B. 1600 bis 20000 Dalton, vorzugsweise 2000 bis 12000 und insbesondere im Bereich von 3000 bis 10000 Dalton auf. Die hier und im Folgenden angegebenen Molekulargewichte wurden mittels Gelpermeationschromatographie bestimmt, wobei man zur Erfassung der absoluten Molekulargewichte eine Kalibrierung mit durch Fraktionierung gewonnenen Standards mit enger Molekulargewichtsverteilung vornimmt, sofern nichts anderes angegeben ist.

Die nach dem erfindungsgemäßen Verfahren ohne Nachbehandlung erhaltenen Produkte weisen in der Regel zahlenmittlere Molekulargewichte $M_n$ im Bereich von 1600 bis 10000 Dalton und insbesondere im Bereich von 2000 bis 7000 Dalton auf, bestimmt mittels Gelpermeationschromatographie. Durch eine thermische Nachbehandlung, wie zuvor beschrieben, können Produkte mit zahlenmittleren Molekulargewichten oberhalb 3000 Dalton, insbesondere oberhalb 4000 Dalton, besonders bevorzugt oberhalb 5000 Dalton bis hin zu Werten oberhalb 6000 Dalton erhalten werden.

Die erfindungsgemäß erhaltenen Polyalkyl(halb)metallate zeichnen sich u.a. dadurch aus, dass sie bei Raumtemperatur flüssig sind, d. h. eine Viskosität unterhalb 100000 Pa.s aufweisen. Entsprechend ihrem Molekulargewicht, kann die Viskosität im Bereich von 0,01 bis 100000 Pa.s, vorzugsweise im Bereich von 0,02 bis 50000 Pa.s und insbesondere imBereich von 0,1 bis 5000 Pa.s variieren. Hier und im folgenden sind die angegebenen Werte die auf eine Schergeschwindigkeit 0 extrapolierte 0-Viskosität.

Die erfindungsgemäß erhaltenen, flüssigen, verzweigten Polyalkyl(halb)metallate mit einem zahlenmittleren Molekulargewicht Mn ≥ 1600, insbesondere ≥ 2000 und besonders bevorzugt ≥ 3000 Dalton können im Falle von M = Si auch dadurch hergestellt werden, dass man ein teilverzweigtes Polyalkylsilikat, das nach dem Verfahren von V.V.Kazakowa et al. hergestellt wurde, der vorstehend beschriebenen, thermischen Nachbehandlung bei Temperaturen oberhalb 100°C und einem verminderten Druck unterwirft.

Die erfindungsgemäßen erhaltenen Polyalkyl(halb)metallate zeichnen sich weiterhin durch die Abwesenheit von (halb)metallgebundenen OH-Gruppen, d.h. das Fehlen nachweisbarer Mengen dieser Gruppen, aus. Sie weisen daher eine höhere Lagerstabilität auf als andere vergleichbare Kondensationsprodukte.

Aufgrund ihrer herstellungsbedingten Wasserfreiheit lassen sich die erfindungsgemäß erhaltenen Polyalkaly(halb)metallate leichter in organische Matrizes, beispielsweise in Polymere einbringen.

Die erfindungsgemäß hergestellten Polyalkyl(halb)metallate reagieren in an sich bekannter Weise unter Einwirkung von Feuchtigkeit zu hochvernetzten, festen Produkten und bei längerer Einwirkungsdauer und/oder erhöhten Temperaturen zu den Oxiden bzw. Hydroxiden der Metalle ab. Aufgrund der in den erfindungsgemäß hergestellten Polyalkyl(halb)metallaten vorliegenden verzweigten M-O-M-Ketten läuft jedoch die Oxid-Bildung sehr viel sauberer ab als in den bekannten Polyalkylsilikaten des Standes der Technik. Aufgrund ihres hohen Metallgehaltes kommt es bei Einsatz der Polyalkyl(halb)metallate zu einem sehr viel geringeren Volumenschrumpf. Diese Eigenschaft ist insbesondere im Hinblick auf ihren Einsatz zur Herstellung von Kompositionsmaterialien ein Vorteil.

Die vorteilhaften Eigenschaften der erfindungsgemäßen hergestellten Polyalkyl(halb)metallate eröffnen eine Vielzahl von Anwendungsmöglichkeiten. Insbesondere eignen sie sich zur Herstellung von oxidischen Beschichtungen auf Oberflächen. Aufgrund ihrer Eigenschaft, bei Einwirkung von Feuchtigkeit vernetzte polymere Filme zu bilden, eignen sie sich außerdem als filmbildender Bestandteil (Bindemittel) in Beschichtungssystemen.

Die Beschichtung von Oberflächen mit den erfindungsgemäß hergestellten Polyalkyl(halb)metallaten erfolgt üblicherweise, indem man das Polyalkyl(halb)metallat in geeigneter Weise auf eine Oberfläche aufbringt und anschließend die dabei erhaltene feuchte (flüssige) Beschichtung aushärtet. Zum Aufbringen der Polyalkyl(halb)-metallate eignen sich die für das Aufbringen von Flüssigkeiten üblichen Verfahren wie Streichen, Rakeln, Rotationsschleudern (Spin-Coaten) und dergleichen. Je nach Viskosität kann das Polyalkyl(halb)metallat in gelöster Form oder in Substanz aufgebracht werden.

Geeignete Lösungsmittel sind Alkohole wie Methanol, Ethanol, n-Propanol, Isopropanol, n-Butanol und dergleichen, aromatische Kohlenwasserstoffe wie Benzol, Toluol, Xylole, tert.-Butylbenzol, deren Mischungen mit aliphatischen und cycloaliphatischen Kohlenwasserstoffen wie Mischungen von Aromaten mit Hexan, Octan, Cyclohexan und dergleichen, weiterhin Benzinfraktionen, aliphatische und alicyclische Ether wie Diethylether, Methyl-tert.-butylether, Diisopropylether und dergleichen, halogenierte Kohlenwasserstoffe wie Dichlormethan, Trichlormethan, Dichlorethan, Trichlorethan sowie Mischungen der vorgenannten Lösungsmittel.

Die Polyalky(halb)metallate können zusammen mit geeigneten Füllstoffen oder anderen strukturgebenden Feststoffen auf die zu beschichtende Oberfläche aufgebracht werden. Auf diese Weise kann man in an sich bekannter Weise strukturierte Oberflächen herstellen.

Das Verfestigen bzw. Aushärten der durch Aufbringen der erfindungsgemäß hergestellten Polyalkyl(halb)metallate erhaltenen Beschichtungen erfolgt in an sich üblicher Weise durch Einwirkung von Feuchtigkeit, insbesondere Luftfeuchtigkeit, gegebenenfalls in Gegenwart basischer Katalysatoren wie Ammoniak-Dampf oder flüchtigen Aminen. Um die Umwandlung in die Oxide zu vervollständigen, kann es vorteilhaft sein, die dabei erhaltene Beschichtung einer erhöhten Temperatur im Sinne einer Kalzinierung, insbesondere einer Temperatur oberhalb 300°C und speziell oberhalb 500°C auszusetzen. Hierbei werden die noch vorhandenen Alkoxy-Gruppen aus den Beschichtungen entfernt und es bilden sich die entsprechenden Oxide bzw. Hydroxide der vorgenannten Metalle aus.

Die unter Anwendung der erfindungsgemäßen erhaltenen Polyalkyl(halb)metallate hergestellten Beschichtungen zeigen anders als Beschichtungen, die unter Verwendung handelsüblicher Polyalkyl(halb)metallate hergestellt werden, keine Schrumpf-Risse, selbst bei Beschichtungsdicken bis hin zu 20 $\mu m$. Außerdem eignen sich die erfindungsgemäßen hergestellten Polyalkyl(halb)metallate zur Erzeugung sehr dünner Oxidschichten, beispielsweise unterhalb 100 $\mu m$ und speziell unterhalb 10 $\mu m$, z. B. im Bereich von 0,01 bis 10 $\mu m$.

Desweiteren eignen sich die erfindungsgemäß erhaltenen Polyalkyl(halb)metallate in besonderem Maße zur Herstellung von Komposit-Materialien mit üblichen organischen Polymeren, insbesondere mit handelsüblichen Kunststoffen.

Die Herstellung der Komposit-Materialien kann grundsätzlich durch Vermischen der organischen Polymere mit den erfindungsgemäß erhaltenen Polyalkyl(halb)metallaten oder durch Herstellung der organischen Polymere in Gegenwart der Polyalkyl(halb)metallate erfolgen. Aufgrund ihrer Wasserfreiheit können die Polyalkyl(halb)metallate besonders gleichmäßig in Kunststoffe oder in Monomere im Sinne eines flüssigen Additivs eingearbeitet werden. Ein Einsatz von organischen Lösungsmitteln als Löslichkeitsvermittler ist dabei prinzipiell nicht erforderlich. Dies erleichtert nicht nur die Handhabung der Polyalkyl(halb)metallate, sondern führt auch zu einer besseren Produktqualität, da auf diese Weise der Anteil an flüchtigen Bestandteilen, der im Verlauf der Kompositbildung entfernt werden muss, weiter verringert wird.

Das Vermischen von organischen Polymeren mit den erfindungsgemäß hergestellten Polyalkyl(halb)metallaten kann in an sich üblicher Weise erfolgen. Zu nennen ist beispielsweise das gemeinsame Lösen der Bestandteile in einem geeigneten organischen Lösungsmittel und Entfernen des Lösungsmittels sowie Koextrusion von organischem Polymer und Polyalkyl(halb)metallat. Diese Methoden bieten sich insbesondere bei löslichen bzw. thermoplastischen Kunststoffmaterialien an. Beispiele für geeignete thermoplastische bzw. lösliche Kunststoffe sind Polyalkyl(meth)acrylate, Polystyrole, Homo- und Copolymere des Styrols mit geeigneten Comonomeren wie Polystyrol-Polyacrylnitril-Copolymere, Polystyrol-Butadien-Copolymere, Polystyrol-Polyalkyl(meth)acrylate, weiterhin Polyvinylchlorid, Polyvinylether, Polyvinylacetat, Polyolefine wie Polyethylen, Polypropylen, Polyethylen/Polyproylen-Copolymere, Polyarylether, Polycarbonate, Polyaryletherketone, aliphatische Polyketone, Polyamide, Polyester, Polyurethane und dergleichen.

Außerdem können die Komposite hergestellt werden, indem man die Herstellung der Kunststoffe in Gegenwart der erfindungsgemäß erhaltenen Polyalkyl(halb)metallate herstellt, beispielsweise durch Polymerisation geeigneter ethylenisch ungesättigter Monomere, durch Polykondensations-Reaktionen und/oder durch Stufenwachstumsreaktion im Sinne einer Polyaddition. Diese Methode bietet sich insbesondere dann an, wenn der Kunststoff ein Duroplast ist. Diese Methode ist jedoch auch für die Herstellung von Komposit-Materialien aus Polyalkyl(halb)metallaten bzw. deren Oxide und thermoplastischen Kunststoffen geeignet.

Bei der Herstellung der Kompositmaterialien ist es in der Regel von Vorteil, für eine intensive Durchmischung von erfindungsgemäß hergestellten Polyalkyl(halb)metallat mit dem organischen Kunststoff bzw. mit den kunststoffbildenden Monomer- bzw. Oligomerbestandteilen Sorge zu tragen. Durch die Wasserfreiheit und den flüssigen Charakter der Polyalkyl(halb)metallate wird dieses Durchmischen naturgemäß erleichtert.

Der Anteil an erfindungsgemäß hergestellten Polyalkyl(halb)metallaten in den Komposit-Materialien liegt in der Regel im Bereich von 1 bis 100 Gew.-%, bezogen auf die organischen Polymere oder bezogen auf deren konstituierende Bestandteile.

Beispiele für bevorzugte Ausführungsformen von Kompositmaterialien umfassen als organisches Polymer ein aus ethylenisch ungesättigten Monomeren aufgebautes Polymer, insbesondere ein Poly(alkyl[meth]acrylat) wie PMMA oder ein Polyolefin und wenigstens ein erfindungsgemäß hergestelltes Polyalkyl(halb)metallat, insbesondere ein Poly (dialkoxysiloxan). Weitere Beispiele für Kompositmaterialien umfassen als organisches Polymer ein Phenol-Formaldehyd-Harz und ein Polyalkyl(halb)metallat, insbesondere ein Poly(dialkoxysiloxan).

Die erhältlichen Nanokomposite zeichnen sich durch eine besonders gleichmäßige Verteilung der anorganischen Bestandteile in der organischen Polymermatrix aus. Zudem lassen sich auf diesem Wege Kompositmaterialien herstellen, deren Phasenstruktur bikontinuierlich ist. Hierunter versteht man Phasenstrukturen, in denen sich organische und anorganische Phasen im Sinne interpenetrierender Netzwerke gegenseitig durchdringen.

Die folgenden Beispiele sollen die Erfindung verdeutlichen, ohne sie jedoch einzuschränken.

Beispiel 1: Verzweigtes Poly(diethylsilikat) über die Triethoxysilanol-Route (Vergleich)

1.1 Natriumoxytriethoxysilan

Bei 5 °C gab man zu einer Lösung von 208 g (1 mol) Tetraethylsilikat in 500 ml Toluol unter Rühren 40 g (1 mol) pulverisiertes Natriumhydroxid. Man rührte zwei Stunden und destillierte danach Toluol und das in der Umsetzung gebildete Ethanol an einem Rotationsverdampfer unter vermindertem Druck (Membranpumpe) ab. Über Nacht trocknete man den öligen Rückstand in einem Vakuumtrockenschrank bei 50 mbar/40 °C (Ausbeute: 182 g). Man löste 92 g des erhaltenen Feststoffes in 270 ml Toluol und filtrierte von unlöslichen Nebenprodukten ab.

1.2 Triethoxysilanol

Man verdünnte das in 1.1 erhaltene Natriumoxytriethoxysilanol-Lösung mit Toluol auf ein Gesamtvolumen von 500 ml und tropfte sie bei 0 °C unter Rühren zu einer Lösung von Essigsäure (stöchiometrische Menge) in 300 ml Toluol. (Zur Berechnung der stöchiometrisch benötigten Menge an Säure engte man 2 ml der Natriumoxytriethoxysilan-Toluol-Lösung zur Trockne ein, löste den Rückstand in 20 ml Wasser, gab 2 Tropfen einer 1 Gew.-%igen Phenolphthalein-Lösung zu und titrierte mit 0,1 molarer Salzsäure). Anschließend filtrierte man das ausgefallene Natriumacetat ab, wusch mit Toluol und engte die Toluol-Lösung bei 8 mbar/30 °C ein, wobei man als Rückstand 38,3 g einer gelben Flüssigkeit erhielt.

1.3 Verzweigtes Poly(diethylsilikat)

Innerhalb 1 Stunde gab man bei -30 °C das in 1.2 erhaltene Triethoxysilanol zu einer Lösung von 6,5 g trockenem Ammoniak in 100 ml wasserfreiem Ethanol. Man ließ auf Raumtemperatur erwärmen, über Nacht stehen und destillierte das Ethanol und restlichen Ammoniak ab, wobei man 30,3 g einer gelben Flüssigkeit erhielt. Nach dem Trocken des Rückstandes im Vakuum (0,1 mbar) erhielt man 29,7 g der Titelverbindung.

Das so erhaltene Poly(diethoxysiloxan) enthielt 22,8 Gew.-% Silizium. Der Verzweigungsgrad nach Frey betrug 0,66. Das zahlenmittlere Molekulargewicht lag bei 1300 Dalton, das gewichtsmittlere Molekulargewicht bei 6500 Dalton. Die Viskosität (0-Viskosität) lab bei 0.019 Pa.s. Die durch Elementaranalyse ermittelte Summenformel lautet: $[SiO(OC_2H_5)_2]_{0.84}[SiO_2]_{0.16}$

Beispiel 2: Verzweigtes Poly(diethoxysiloxan) über die Acetoxytriethoxysilan-Route (Vergleich)

2.1 Acetoxytriethoxysilan

In einem Reaktionsgefäß, ausgerüstet mit Mikrodestillationsbrücke und Gaseinlass, erhitzte man in einer Argonatmosphäre unter Rühren 104 g (0,5 mol) Tetraethoxysilan und 51 g (0,5 mol) Essigsäureanhydrid 36 Stunden auf 137 °C, wobei man den während der Reaktion gebildeten Essigsäureethylester abdestillierte (29,8 g; 0,34 mol). Anschließend führte man eine fraktionierte Destillation (3 mbar, 30 cm Vigreux-Kolonne) der Reaktionsmischung durch, wobei man 43 g (0,19 mol, 39 % der Theorie) Acetoxytriethoxysilan mit einem Siedepunkt von 61 °C/3 mbar in 95 %iger Reinheit ($^1$H-NMR) erhielt.

$^1$H-NMR (CDCl$_3$, 400 MHz): δ(ppm) = 1,25 (t, J = 7,1 Hz, 9H), 2,12 (s, 3H), 3,93 (q, J = 7,1 Hz, 6H).
$^{13}$C-NMR (CDCl$_3$, 50 MHz): δ(ppm) = 17,92, 22,48, 59,98, 169,68.
$^{29}$Si-NMR (Toluol-d$_8$, 100 MHz): δ(ppm) = -86,17.
IR (Film): 464, 597, 676, 768, 797, 950, 973, 1022, 1107, 1170, 1256, 1372, 1443, 1485, 1743, 2900, 2932, 2979.

|  |  |  |
|---|---|---|
| berechnet: | C 43,24 | H 8,11 |
| gefunden: | C 42,56 | H 8,10. |

2.2 Verzweigtes Polyethoxysiloxan

In einem Reaktionsgefäß erhitzte man unter Ausschluss von Wasser Argonatmosphäre einer unter Rühren 3 g des in 2.1 erhaltenen Acetoxytriethoxysilans 33 Stunden auf 137 °C, wobei man den während der Polymerisation gebildeten Essigsäureethylester verdampfte. Während der ersten 24 Stunden der Umsetzung entnahm man dem Reaktionsgemisch alle 6 Stunden, danach alle 3 Stunden 40 μl Proben und löste sie für die SEC-Analyse in 1 ml Tetrahydrofuran. Nach 33 Stunden ließ man das Reaktionsgemisch auf Raumtemperatur abkühlen und erhielt 1,0 g des Polymers (55 % der Theorie).

Das so erhaltene Poly(diethoxysiloxan) enthielt 22,8 Gew.-% Silizium. Der Verzweigungsgrad nach Frey betrug 0,44. Das zahlenmittlere Molekulargewicht lag bei 12000 Dalton, das gewichtsmittlere Molekulargewicht bei 22 x 10$^6$ Dalton. Elementaranalytisch bestimmte Summenformel: [SiO(OC$_2$H$_5$)$_2$]$_{0,88}$[SiO$_2$]$_{0,12}$

Beispiel 3: Verzweigtes Poly(diethoxysiloxan) über ein einstufiges Verfahren

a) In einem Reaktionsgefäß, ausgerüstet mit Dephlegmator, Destillationsbrücke mit Thermometer und Gaseinlass erwärmte man in einer Stickstoffatmosphäre 416 g (2 mol) Tetraethoxysilan (zur Synthese, Merck), 204 g (2 mol) Essigsäureanhydrid (reinst, Merck) und 0,7 g (0,154 mol-%) Titanethylat (rein, Aldrich) unter Rühren auf 130°C. Innerhalb 14,5 Stunden destillierten 330,5 g (3,76 mol) des während der Reaktion freigesetzten Essigsäureethylesters ab. Weitere 24 g Destillat ließen sich im Vakuum (1 mbar) bei 40 °C entfernen. Man erhielt 264,5 g (1,97 mol) verzweigtes Poly(diethoxysiloxan) als gelbliche, ölige Flüssigkeit.

Das so erhaltene Poly(diethoxysiloxan) enthielt 21,49 Gew.-% Silizium. Der Verzweigungsgrad nach Frey betrug 0,48. Das zahlenmittlere Molekulargewicht M$_n$ bei 1700 Dalton, das gewichtsmittlere Molekulargewicht M$_w$ 5200 Dalton, die Viskosität bei 0.015 Pa.s. Summenformel [SiO(OC$_2$H$_5$)$_2$]$_{0,95}$[SiO$_2$]$_{0,05}$, bestimmt mittels Elementaranalyse.

b) In einem Reaktionsgefäß, ausgerüstet mit Dephlegmator, Destillationsbrücke mit Thermometer, Gaseinlass erwärmte man 416 g (2 mol) Tetraethoxysilan (zur Synthese, Merck), 204 g (2 mol) Essigsäureanhydrid (reinst, Merck) und 4,3 g (0,95 mol-%) Titanethylat (rein, Aldrich)unter Rühren (1200 Upm) in einem Silikonölbad auf 130 °C, wobei über 90 % des Reaktionsgefäßes in das Ölbad eintauchte. In 90 Minuten destillierten 325,9 g Destillat über. Im Gegensatz zu Beispiel 3a bestand das Destillat nicht nur aus Essigsäureethylester sondern enthielt auch 7,3 mol-% Essigsäureanhydrid und 2,5 mol-% Tetraethoxysilan. Während weiterer 90 Minuten destillierten im Vakuum (7 mbar) bei 40 °C weitere 28 g Destillat über. Das Destillat enthielt Essigsäureethylester und 4,6 mol-% Tetraethoxysilan. Die Gesamtmenge an Essigsäureethylester im Destillat betrug 305 g (= 3,5 mol). Man erhielt 275 g (Theorie: 268 g) der Titelverbindung als gelbliche, ölige Flüssigkeit.

Das so erhaltene Poly(diethoxysiloxan) enthielt 19,9 Gew.-% Silizium. Der Verzweigungsgrad nach Frey betrug 0,42 Das zahlenmittlere Molekulargewicht lag bei 1100 Dalton, das gewichtsmittlere Molekulargewicht bei 3600 Dalton.

Tabelle 1: Ergebnisse der $^{29}$Si-NHR-Untersuchungen

| | $Q_1$[a) [%] | $Q_2$[b) [%] | $Q_3$[c) [%] | $Q_4$[d) [%] | Verzweigungsgrad |
|---|---|---|---|---|---|
| Polyethoxysiloxan über die Silanol-Route (Beispiel 1) | 20,5 | 31,5 | 31,0 | 15,0 | 0,66 |
| Polyethoxysiloxan gemäß Beispiel 2 nach 25 h | 26 | 54 | 20 | 0 | 0,32 |
| Polyethoxysiloxan gemäß Beispiel 2 nach 33 h | 12,5 | 51,2 | 36,3 | 0 | 0,44 |
| Polyethoxysiloxan über die Acetoxy-Route; mit Katalysator (Beispiel 3a) | 23,8 | 43,2 | 26,9 | 3,9 | 0,48 |
| [a) terminale Einheiten<br>[b) lineare Einheiten<br>[c) semidendritische Einheiten<br>[d) dendritische Einheiten | | | | | |

Beispiel 4: (Vergleich) Verzweigtes Poly(methoxyacetoxysiloxan) über ein einstufiges Verfahren

Man erhitzte 15,2 g (0,1 mol) Tetramethoxysilan mit 10,2 g (0,1 mol) Essigsäureanhydrid 8 Stunden bei einer Ölbadtemperatur von 120 °C. Während der Umsetzung destillierten 5,6 g (0,076 mol) Essigsäuremethylester über. Die Destillation bis 160 °C/3 mbar ergab als Rückstand 2,6 g eines Polymers, das laut [2s]Si-NMR neben den Methoxygruppen noch unumgesetzte Acetoxygruppen enthielt.

GPC-Analyse des Reaktionsprodukts ergaben für das zahlenmittlere Molekulargewicht $M_n$ = 1,2 kD, und für das gewichtsmittlere Molekulargewicht $M_w$ = 1,8 kD (als Referenzstandard dienten lineare Polystyrolproben).

Beispiel 5: Verzweigtes Poly(methylyethoxysiloxan) zweistufige Route (Vergleich)

a) In einem Reaktionsgefäß mit Destillationsbrücke und Trockenrohr gab man 17,8 g (0,1 mol) Methyltriethoxysilan und 10,2 g (0,1 mol) Essigsäureanhydrid. Man erwärmte 72 Stunden bei einer Ölbadtemperatur von 140 °C. Während der Umsetzung destillierten 9,7 g (0,11 mol) Essigsäureethylester über. Die fraktionierte Destillation des Rückstandes bei 50 mbar und einer Kopftemperatur von 76 - 79 °C ergab 7,1 g Diethoxymethylacetoxysilan in 75%iger Reinheit. Eine zweite fraktionierte Destillation bei 100 mbar und einer Kopftemperatur von 98 °C ergab 3,1 g (0,016 mol, 16 % der Theorie) Diethoxymethylacetoxysilan in 85%iger Reinheit.

b) In einem Reaktionsgefäß mit Trockenrohr erhitzte man unter Rühren 1 g Diethoxymethylacetoxysilan aus Schritt a) 40 Stunden bei 165 °C.

GPC-Analyse des Reaktionsprodukts ergaben für das zahlenmittlere Molekulargewicht $M_n$ = 2,8 kD, und für das gewichtsmittlere Molekulargewicht $M_w$ = 4,4 kD (als Referenzstandard dienten lineare Polystyrolproben).

Beispiel 6: Verzweigtes Poly(methylethoxysiloxan) über ein einstufiges Verfahren

In einem Reaktionsgefäß mit Dephlegmator (30 cm), Destillationsbrücke mit Gaseinlass, Thermometer und Trockenrohr erhitzte man unter Stickstoffatmosphäre und kräftigen Rühren 82,2 g (0,46 mol) Methyltriethoxysilan, 47,1 g (0,46 mol), Essigsäureanhydrid (reinst, Merck) und 1,05 g (0,0046 mol) Titanethylat (rein, Aldrich) auf 135 °C (Ölbadtemperatur). Innerhalb 6 Stunden destillierten 75 g (0,85 mol, 92,4 % der Theorie) Essigsäureethylester über. Weitere 4,8 g (0,055 mol, 6,0 % der Theorie) Destillat ließen sich im Vakuum bei 18 mbar und einer Ölbadtemperatur von 80 °C am Rotationsverdampfer entfernen. Man erhielt 50,5 g (47,8 % der Theorie) verzweigtes Poly(methylethoxysiloxan) als gelblich ölige und leicht trübe Flüssigkeit. Die Trübung verschwand nach dreitägiger Lagerung bei Raumtemperatur.

GPC-Analyse des Reaktionsprodukts ergaben für das zahlenmittlere Molekulargewicht $M_n$ = 5,3 kD, und für das gewichtsmittlere Molekulargewicht $M_w$ = 54,0 kD (als Referenzstandard dienten lineare Polystyrolproben).

Theoretisch: $((SiO(OCH_2CH_3)(CH_3))_n$ $(104,2)_n$:
berechnet:       C 34,59       H 7,76 Si 26,96

(fortgesetzt)

Theoretisch: $((SiO(OCH_2CH_3)(CH_3))_n$ $(104,2)_n$:
gefunden: C 34,44 H 7,47 Si 27,57

Beispiel 7: Verzweigtes Poly(heptadeca(1,1,2,2)tetrahydrodecylethoxysiloxan) über ein einstufiges Verfahren

Man mischte 6,1 g (0,01 mol) Heptadecafluor(1,1,2,2)tetrahydrodecyltriethoxysilan mit 1,02 g (0,01 mol) Essigsäureanhydrid (reinst, Merck) und 0,023 g (0,0001 mol) Titanethylat (rein, Aldrich) und erhitzte 16 Stunden auf 135 °C. Nach 2 Stunden bildete sich eine kleine Menge eines weißen Feststoffes, der sich während der Umsetzung auflöste. Während der Umsetzung destillierte man 1,25 g (0,014 mol, 70 % der Theorie) Essigsäureethylester ab. Man erhielt 5,2 g eines homogenen Produktes als bräunliche und ölige Substanz. Beim Behandeln dieser Substanz über 2 Stunden im Ölpumpenvakuum (1 mbar) erhielt man weitere 0,4 g (0,0046 mol, 23 % der Theorie) Essigsäureethylester.

GPC-Analyse des Reaktionsprodukts ergaben für das zahlenmittlere Molekulargewicht $M_n$ = 8,63 kD und für das gewichtsmittlere Molekulargewicht $M_w$ = 9,68 kD (als Referenzstandard dienten lineare Polyisoprenproben mit enger Molmassenverteilung, Freon diente als Eluierungsmittel).

| | | | |
|---|---|---|---|
| berechnet: | C 26,88 | H 1,69 | Si 5,24 |
| gefunden: | C 27,75 | H 1,95 | Si 5,47 |

Beispiel 8: Thermisches Nachbehandeln unter Erhöhung der molekularen Masse des verzweigten Poly(diethoxysiloxans)

a) Man erhitzte 263 g verzweigtes Poly(diethoxysiloxan) aus Beispiel 3a 2 Stunden bei 130 °C/1 mbar, und entfernte gleichzeitig 70 g Tetraethoxysilan. Man erhielt 193 g Polymer mit einer Viskosität von 0,658 Pa.s.

Das $^{29}$Si-NMR-Spektrums zeigte, dass der relative Anteil des Tetraethoxysilans und der Endgruppen im Polymer abnahmen. Der Anteil des entfernten Tetraethoxysilans (17 mol-%) war viel höher als der ursprünglich im Polymer enthaltene Anteil (etwa sechsmal). GPC-Messungen zeigten eine Zunahme der molekularen Masse, die vermutlich durch Umesterungsreaktionen zwischen oder innerhalb der Polymermoleküle hervorgerufen wurden und die Freisetzung von Tetraethoxysilan verursachten.

| | | | |
|---|---|---|---|
| Elementaranalyse | | | |
| berechnet: | C 31,39 | H 6,57 | Si 24,05 |
| gefunden: | C 31,47 | H 6,60 | Si 24,05 |

Dies entspricht der Summenformel $[SiO(OC_2H_5)_2]_{0,76}[SiO_2]_{0,24}$.
GPC-Analyse des Rückstands ergab für das zahlenmittlere Molekulargewicht $M_n$ = 3,6 kD, und für das gewichtsmittlere Molekulargewicht $M_w$ = 18,0 kD.

b) In einer Glaskugelrohrdestillationsapparatur (Büchi, GKR-51) unterwarf man 3,63 g verzweigtes Poly(diethoxysiloxan) aus Beispiel 1 bei Temperaturen bis 250 °C und einem Endvakuum von 0,2 mbar einer fraktionierten Destillation, wobei man 4 Fraktionen auffing. Etwa 45 % flüchtige Bestandteile lassen sich durch eine solche Behandlung aus dem Polyethoxysiloxan entfernen.

Man erhielt 1,94 g (53 %) eines hochviskosen Polymers als Rückstand. Das gebildete Polymer ist bis 250 °C stabil.
GPC-Analyse des Rückstands ergaben für das zahlenmittlere Molekulargewicht $M_n$ = 6,2 kD und für das gewichtsmittlere Molekulargewicht $M_w$ = 41,0 kD (als Referenzstandard dienten lineare Polystyrolproben). Viskosität: 41800 Pa.s.

| | | | |
|---|---|---|---|
| Elementaranalyse: | | | |
| berechnet: | C 27,61 | H 5,58 | Si 27,56 |
| gefunden: | C 27,70 | H 5,60 | Si 27,56 |

$((SiO(OCH_2CH_3)_2)_{1,20}(SiO_2))_n$ $(277,9)_n$ = $[SiO(OC_2H_5)_2]_{0,56}[SiO_2]_{0,44}$

Man untersuchte die erhaltenen Fraktionen $^1$H-, $^{13}$C- und $^{29}$Si-NMR-spektroskopisch. Fraktion 2 bestand hauptsächlich aus Dimeren und Fraktion 3 und 4 aus Oligomeren. Fraktion 1 und die in der Kühlfalle aufgefangene Substanz bestanden hauptsächlich aus Tetraethoxysilan. Der Rückstand aus der fraktionierten Destillation war in organischen Lösungsmitteln löslich und wies im Vergleich zum Ausgangsmaterial eine viel höhere Viskosität auf. SEC-Untersuchungen zeigten die Abnahme der Masse im niedermolekularen Bereich. Außerdem wurden während des Strippens höhermolekulare Produkte gebildet, die vermutlich - wie im Falle der Behandlung bei 130 °C - durch Umesterungsreaktionen zwischen und innerhalb der Polymermoleküle entstanden.

c) Verzweigtes Poly(diethoxysiloxan) aus Beispiel 3a wurde in einer Verdampfer-Anordung, umfassend einen Vakuum-Dünnschichtverdampfer (Typ S 51/31; Normag; Illmenau, Deutschland) mit Drehschieberölpumpe (Modell RZ-5; nominal $4*10^{-4}$ mbar; 5,6 m³/h; Vacuubrand, Deutschland), Magnetkupplung (Buddelberg, Mannheim, Deutschland) für den Rührer (Modell RZR 2020, Heidolph, Deutschland) betrieben auf der höchsten Stufe 10, Heizvorrichtung (Typ 500, K.K. Juchheim Laborgeräte, Deutschland) und Heizwächter (Typ 50.102.00; K. K. Juchheim Laborgeräte, Deutschland) behandelt. Bei 100 °C und einem Druck 1 mbar erhielt man einen Rückstand (80,9 Gew.-%) mit einem zahlenmittleren Molekulargewicht $M_n$ = 3,40 kD und einem gewichtsmittleren Molekulargewicht $M_w$ = 10,40 kD.

d) Analog Beispiel 8c wurde das Produkt aus 3a bei Temperaturen oberhalb 150 °C und geringeren Fließraten behandelt. Der Rückstand (63,9 Gew.-%) wies ein zahlenmittleres Molekulargewicht $M_n$ = 2,90 kD und ein gewichtsmittleres Molekulargewicht $M_w$ = 11,40 kD auf. Die Viskosität lag bei 0.155 Pa.s. Der Siliziumgehalt betrug 23,0 Gew.-%.

Die zwei vorstehend beschriebenen Verfahren 8a) und 8b) bewirken die Zunahme der durchschnittlichen molekularen Masse, da einerseits niedermolekulare Verbindungen entfernt werden und andererseits auch intermolekularen Vernetzungsreaktionen stattfinden. Demgegenüber wird eine signifikante intermolekulare Vernetzung zwischen den Polymermolekülen und Zunahme der Fraktion des höhermolekularen Polymers in Versuch 8c nicht beobachtet. Hier ist die Steigerung des Molekulargewichts in erster Linie auf abdestillierte niedermolekulare Bestandteile zurückzuführen und nur in geringem Maß intramolekulare Vernetzung. Dies zeigt unter anderem auch Zunahme des Tetraethoxysilan-Peaks in den $^{29}$Si-NMR-Spektren. In Beispiel 8 d) wiederum findet ein verstärkter Molekulargewichtsaufbau statt, erkenntlich an der stärkeren Zunahme des massenmittleren Molekulargewichts.

q Beispiel 9: Beschichtung von Glas mit verzweigten Poly(diethoxysiloxan)

Die Glasplatten wurden zunächst gereinigt.

a) Mit einem Rakel (Dr. Blade, Braive Instruments Nr. 4000) trug man auf Glasplatten (24 x 60 mm x 1 mm; Menzel) 0,2 ml bis 0,5 ml verzweigtes Poly(diethoxysiloxan) aus Beispiel 8a mit einer Viskosität von 0,7 Pas in unterschiedlicher Dicke (von 50 bis 500 μm) auf. Man härtete dann die Glasplatten 30 Minuten bei 60 °C und 3 Stunden bei 80 °C in Gegenwart eines konz. Ammoniak/Wasser-Gemisches (20 ml) in einem Ofen. Anschließend nahm man die Platten aus dem Ofen und ließ sie bei Raumtemperatur abkühlen. Beschichtungen mit einer anfänglichen Dicke von 250 beziehungsweise 500 μm zeigten 1 Stunde nach dem Abkühlen Risse. Beschichtungen mit 50 μm beziehungsweise 100 μm anfänglicher Dicke zeigten nach 1 Stunde keine Risse.

b) Mit Hilfe eines Spincoaters beschichtete man Glasplatten mit 0,1 ml verzweigten Poly(diethoxysiloxanen) aus den Beispielen 3a, 8a und 8d mit Viskositäten im Bereich von 0,015 Pas bis 0,7 Pa.s ohne Lösungsmittel. Bei dem verzweigtem Poly(diethoxysiloxan) aus Beispiel 8d mit einer Viskosität von 42000 Pa.s wurde eine 1:1 Gew.-% Lösung in Toluol verwendet. Man trug bei zwei verschiedenen Rotationsgeschwindigkeiten auf. Nach 30 Sekunden bei 500 Upm erhöhte man in einem Beispiel die Geschwindigkeit auf 2000 Upm/60 Sekunden, während man im anderen Beispiel auf 6000 Upm/60 Sekunden erhöhte. Man härtete dann die Beschichtungen 12 Stunden bei 50 °C in Gegenwart eines konz. Ammoniak/Wasser-Gemisches (20 ml) in einem Ofen. Man ließ innerhalb 3 Stunden die Beschichtung auf Raumtemperatur abkühlen.

Man untersuchte die Erhaltenen Beschichtungen mit Rasterkraftelektronenmikroskopie (scanning force microscopy); die Ergebnisse sind nachfolgend zusammengefasst:

|  | $Z_a$[f)] [nm] | $R_{max}$[g)] [nm] | $R_a$[h)] [nm] | $R_q$[i)] [nm] |
|---|---|---|---|---|
| Beispiel 3a | 14,30 | 27,49 | 2,83 | 3,53 |
| Beispiel 8d | 11,76 | 22,40 | 2,17 | 2,69 |

Beispiel 10: Herstellung von Polymethylmethacrylat/Kieselsäure-Nanokomposite

Man beschickte einen Doppelschneckenextruder (DSM, Typ RD11-H-1009-025-4) mit 4,0 g Poly(methylmethacrylat) (Lucryl, BASF) und schmolz bei 220 °C. Man gab bis zu 1,2 g Poly(diethoxysiloxan) aus Beispiel 8b mit einer Viskosität von 42000 Pas, in den Extruder und vermischte 60 Minuten bei 30 Upm und 220 °C. TGA-Messungen zeigten Beladungen des PMMA mit bis zu 12 Gew.-% anorganischem Rest.

Beispiel 11: (Vergleich) Herstellung von Polymethylmethacrylat/Kieselsäure-Nanokomposite unter Verwendung von vorhydrolysiertem verzweigten Poly(diethoxysiloxan) und Tetrahydrofuran als Lösungsmittel.

In 10 ml wasserfreiem Tetrahydrofuran löste man 0,4 g verzweigtes Poly(diethoxysiloxan) (5,5 mmol Ethoxygruppen) aus Beispiel 1. Zu dem Gemisch gab man 88 μl Wasser und 20 μl 12 M Salzsäure (insgesamt 5,5 mmol Wasser). Man erwärmte das Gemisch unter Rühren 24 Stunden am Rückfluss. In der durchsichtigen Lösung löste man 2 g Poly(methylmethacrylat) (Lucryl, BASF). Man goss das Gemisch in einen Exsikkator und trocknete unter Spülen mit Stickstoff den Film, wobei man ein durchsichtiges Material erhielt, das bei Umgebungsbedingungen aufbewahrt wurde.

Man nahm von den Polymethylmethacrylat/Kieselsäure-Nanokomposite aus den Beispielen 10 und 11 TEM-Aufnahmen auf. Dunklere Bereiche in diesen Bildern entsprechen Phasen, die reich an Polysiloxan sind. Die Phasenmorphologie des in Beispiel 10 hergestellten Komposits ist sehr ähnlich und liegt im Mikrometerbereich. Hydrolysiert man das verzweigte Polyethoxysilan vor dem Mischen mit Poly(methylmethacrylat) (Beispiel 11), so werden die Abmessungen der Kieselsäurephase in der Zusammensetzung so klein, dass man sie unter den TEM-Bedingungen nicht mehr erkennen kann.

Beispiel 12: Herstellung von Bakelit/Kieselsäure-Nanocompositen

In fünf verschiedene Reaktionsgefäße gab man jeweils 10 g Bakelit Verbindung A (PL2503K1, Bakelit AG, Deutschland) und 0 g, 0,5 g, 1,5 g, 0,5 g beziehungsweise 1,5 g verzweigtes Poly(diethoxysiloxan) aus Beispiel 8a mit einer Viskosität von 0,7 Pas. Man rührte 6 Minuten und gab dann in die Gefäße 1 bis 3 je 0,6 g Bakelit B (PL2503K2 Bakelit AG, Deutschland) und je 0,4 g Bakelit C (PL2503K3 Bakelit AG, Deutschland) zu. In die Reaktionsgefäße 4 und 5 gab man jeweils die doppelte Menge an Verbindung B und C zu. Man rührte weitere 4 Minuten und goss die Gemische in 80 °C warme Petrischalen (8 cm Durchmesser). Die Mischungen wurden bei 80 °C drei Stunden gehärtet. Die aus den Mischungen 4 und 5 erhaltenen Komposite wiesen Partikel mit einer Größe über 1 μm auf. Bei den aus den Mischungen 2 und 3 erhaltenen Komposite weist die Kieselsäurephase Abmessungen im Submikrometer-Bereich auf.

Beispiel 13: Herstellung von Polypropylen/Kieselsäure-Nanokomposite

Man beschickte einen Doppelschneckenextruder (DSM Typ RD11-H-1009-025-4) mit 4,0 g Polypropylen (Borealis Daplen FS 5031-9504) und schmolz bei 220 °C. Man gab bis zu 2 g verzweigtes Poly(diethoxysiloxan) aus Beispiel 1 mit einer Viskosität von 0,015 Pas in den Miniextruder und vermischte mit dem Polypropylen 30 Minuten bei 30 Upm, bei 220 °C. Nach den TGA-Messungen lagen Beladungen mit bis zu 11 Gew.-% an anorganischem Rest vor. TEM-Untersuchungen zeigten eine gleichförmige Verteilung des anorganischen Materials im unteren Submikrometerbereich.

**Patentansprüche**

1. Verfahren zur Herstellung von Polyalkyl(halb)metallaten, umfassend die Umsetzung von (Halb)metallalkoholaten der allgemeinen Formel I

$$RM(OR^1)_3 \qquad (I)$$

worin

M Si bedeutet;
R für $C_1$-$C_{10}$-Alkyl, $C_3$-$C_{10}$-Alkenyl, Phenyl, Phenyl-$C_1$-$C_4$-alkyl, $C_5$-$C_{10}$- Cycloalkyl, $C_5$-$C_{10}$-Cycloalkyl-$C_1$-$C_4$-alkyl steht, wobei die vorgenannten Gruppen ein oder mehrere Substituenten ausgewählt unter Halogen, $C_1$- $C_4$-Alkyl, $C_1$-$C_4$-Halogenalkyl oder $C_1$-$C_4$-Alkoxy aufweisen können, für eine Gruppe O-Si$(R^2)_3$, worin $R^2$ $C_1$-$C_4$-Alkyl, $C_1$-$C_4$-Halogenalkyl oder $C_1$-$C_4$-Alkoxy bedeutet, oder für $C_1$-$C_4$-Alkoxy steht; und
$R^1$ $C_1$-$C_4$-Alkoxy bedeutet;

mit dem Anhydrid II einer aliphatischen $C_2$-$C_4$-Monocarbonsäure in einer Menge von 0,8 bis 1,2 Mol pro Mol (Halb)metallalkoholat I in Abwesenheit von Wasser und Entfernen von wenigstens 80 %, bezogen auf die theoretische Menge, des bei der Reaktion entstehenden $C_1$-$C_4$-Alkylesters III der aliphatischen $C_2$-$C_4$-Monocarbonsäure, wobei man die Umsetzung des (Halb)metallalkoholats I mit dem Anhydrid II einstufig in Gegenwart katalytischer Mengen an Tetra($C_1$-$C_4$-alkyl)titanat oder Zink(II)alkanolat als Katalysator durchführt.

2. Verfahren nach Anspruch 1, wobei man Essigsäureanhydrid als Anhydrid II einsetzt.

3. Verfahren nach Anspruch 1 oder 2, wobei R in Formel I für $C_1$-$C_4$-Alkoxy steht.

4. Verfahren nach einem der vorhergehenden Ansprüche, wobei man die Umsetzung bei Temperaturen im Bereich von 60 bis 150°C durchführt.

5. Verfahren nach einem der vorhergehenden Ansprüche, wobei man das erhaltene Produkt bei einer Temperatur oberhalb 100°C und einem Druck unterhalb 10 mbar nachbehandelt, bis der Anteil an flüchtigen Komponenten weniger als 5 Gew.-%, bezogen auf das Gesamtgewicht des Produkts ausmacht.

**Claims**

1. A method for producing polyalkyl(semi)metallates, comprising the reaction of (semi)metal alcoholates of general formula I

$$RM(OR^1)_3 \qquad (I)$$

wherein

M means Si
R represents a $(C_1\text{-}C_{10})$-alkyl, $(C_3\text{-}C_{10})$-alkenyl, phenyl, phenyl-$(C_1\text{-}C_4)$-alkyl, $(C_5\text{-}C_{10})$-cycloalkyl, $(C_5\text{-}C_{10})$-cycloalkyl-$(C_1\text{-}C_4)$alkyl group, wherein the aforementioned groups may have one or more substituents selected from a halogen, a $(C_1\text{-}C_4)$-alkyl, $(C_1\text{-}C_4)$-haloalkyl or $(C_1\text{-}C_4)$-alkoxy group, represents an O-Si$(R^2)_3$ group, wherein $R^2$ means $(C_1\text{-}C_4)$-alkyl, $(C_1\text{-}C_4)$-haloalkyl or $(C_1\text{-}C_4)$-alkoxy, or a $(C_1\text{-}C_4)$-alkoxy group; and
$R^1$ means $(C_1\text{-}C_4)$-alkoxy;

with the anhydride II of an aliphatic $(C_2\text{-}C_4)$-monocarboxylic acid in an amount from 0.8 to 1.2 moles per mole of (semi)metal alcoolate I in the absence of water, and the removal of at least 80%, based on the theoretical amount, of the $(C_1\text{-}C_4)$-alkyl ester III of the aliphatic $(C_2\text{-}C_4)$-monocarboxylic acid formed in the reaction, wherein the reaction of the (semi)metal alcoolate I with the anhydride II is conducted in one step in the presence of catalytic amounts of tetra$(C_1\text{-}C_4)$-alkyl titanate or zinc(II) alkanolate as a catalyst.

2. The method according to claim 1, wherein acetic acid anhydride is applied as the anhydride II.

3. The method according to claim 1 or 2, wherein R represents a $(C_1\text{-}C_4)$-alkoxy group in formula I.

4. The method according to any of the preceding claims, wherein the reaction is conducted at temperatures in the range from 60 to 150°C.

5. The method according to any of the preceding claims, wherein the obtained product is post-treated at a temperature above 100°C and at a pressure below 10 mbars, until the proportion of volatile components makes up less than 5% by weight, based on the total weight of the product.

**Revendications**

1. Procédé pour produire des polyalkyl-(semi)métallates, comprenant la réaction d'alcoolates (semi)métalliques de formule générale I

$$RM(OR^1)_3 \qquad (I)$$

dans laquelle

M signifie Si
R représente un groupe alkyle en $C_1$ à $C_{10}$, alcényle en $C_3$ à $C_{10}$, phényle, phényl-(alkyle en $C_1$ à $C_4$), cycloalkyle en $C_5$ à $C_{10}$, (cycloalkyle en $C_5$ à $C_{10}$)-(alkyle en $C_1$ à $C_4$), les groupes précités pouvant présenter un ou plusieurs substituants choisis parmi un atome d'halogène, un groupe alkyle en $C_1$ à $C_4$, halogénoalkyle en $C_1$ à $C_4$, ou alcoxy en $C_1$ à $C_4$, représente un groupe O-Si$(R^2)_3$, dans lequel $R^2$ représente un groupe alkyle en $C_1$ à $C_4$, halogénoalkyle en $C_1$ à $C_4$, ou alcoxy en $C_1$ à $C_4$, ou représente un groupe alcoxy en $C_1$ à $C_4$ ; et
$R^1$ signifie un groupe alcoxy en $C_1$ à $C_4$;

avec l'anhydride II d'un acide monocarboxylique aliphatique en $C_2$ à $C_4$ en une quantité de 0,8 à 1,2 mole par mole d'alcoolate semi-métallique I en l'absence d'eau, et l'élimination d'au moins 80%, par rapport à la quantité théorique, de l'ester alkylique III en $C_1$ à $C_4$ de l'acide monocarboxylique en $C_2$ à $C_4$ aliphatique, qui se forme pendant la réaction, où l'on réalise la réaction de l'alcoolate semi-métallique I avec l'anhydride II en une seule étape en présence de quantités catalytiques de titanate de tétra(alkyle en $C_1$ à $C_4$) ou d'alcanolate de zinc(II) en tant que catalyseur.

2.  Procédé selon la revendication 1, dans lequel on met en oeuvre l'anhydride d'acide acétique en tant qu'anhydride II.

3.  Procédé selon la revendication 1 ou 2, dans lequel R représente un groupe alcoxy en $C_1$ à $C_4$ dans la formule I.

4.  Procédé selon l'une quelconque des revendications précédentes, dans lequel on réalise la réaction à des températures dans la plage de 60 à 150°C.

5.  Procédé selon l'une quelconque des revendications précédentes, dans lequel le produit obtenu est post-traité à une température supérieure à 100°C et à une pression inférieure à 10 mbars, jusqu'à ce que la proportion en composants volatils constitue moins de 5% en poids, par rapport au poids total du produit.

EP 1 576 035 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **V.V. KAZAKOVA et al.** *Doklady Chemistry,* 1996, vol. 349, 190-193